# EUROPÄISCHE PATENTSCHRIFT

(11) **EP 3 166 759 B1**
(45) Veröffentlichungstag und Bekanntmachung des Hinweises auf die Patenterteilung: **27.07.2022**
(21) Anmeldenummer: 15735676.7
(22) Anmeldetag: 07.07.2015
(51) Int. Cl.: B25J 9/16, G05B 19/42

(54) **MASCHINE UND VERFAHREN ZUM BETREIBEN EINER MASCHINE**
MACHINE AND METHOD FOR OPERATING A MACHINE
MACHINE ET PROCÉDÉ PERMETTANT DE FAIRE FONCTIONNER UNE MACHINE

(30) Priorität: 08.07.2014 DE 102014213262
(43) Veröffentlichungstag der Anmeldung: 17.05.2017
(73) Patentinhaber: KUKA Deutschland GmbH, 86165 Augsburg (DE)
(72) Erfinder: AURNHAMMER, Andreas, 81929 München (DE); DÜRNDORFER, Stefan, 86163 Augsburg (DE); HAGENAUER, Andreas, 86316 Friedberg (DE); HÜTTENHOFER, Manfred, 86405 Meitingen (DE)
(74) Vertreter: Böss, Dieter Alexander
(86) Internationale Anmeldenummer: PCT/EP2015/065461
(87) Internationale Veröffentlichungsnummer: WO 2016/005379

(56) Entgegenhaltungen:
- EP-A2- 1 435 280
- DE-A1- 2 526 504
- DE-T2- 69 603 009
- US-A1- 2004 193 321
- US-B2- 8 340 820

## Beschreibung

Die Erfindung betrifft eine Maschine, die eine Steuervorrichtung und eine Mechanik mit wenigstens zwei relativ zueinander angeordneten Bauteilen aufweist, die mittels eines Antriebs der Maschine und gesteuert durch die Steuer-vorrichtung bezüglich einer Achse relativ zueinander beweglich sind und ein Verfahren zum Betreiben einer solchen Maschine.

Ein Beispiel einer solchen Maschine ist ein Industrieroboter. Industrieroboter im Allgemeinen sind Handhabungs-maschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen üblicherweise einen Roboterarm mit mehreren, hintereinander angeordneten Gliedern und programmierbare Steuerungen (Steuervorrichtungen) auf, die während eines Automatikbetriebs des Industrieroboters Antriebe des Industrieroboters für die Bewegungsabläufe des Roboterarms steuern bzw. regeln. Dazu laufen auf den Steuervorrichtungen entsprechende Rechenprogramme, sogenannte Anwenderprogramme. Die Antriebe sind z.B. elektrische Antriebe.

Es kann auch vorgesehen sein, dass der Roboterarm durch Handverfahren manuell mittels eines Programmierhandgerätes bewegt wird (Handverfahrbetrieb). Das Programmierhandgerät ist mit der Steuervorrichtung verbunden und umfasst Eingabemittel. Beim Betätigen der Eingabemittel steuert die Steuervorrichtung die Antriebe des Industrieroboters für die Bewegung des Roboterarms derart an, dass beispielsweise ein sogenannter Tool Center Point eine dem Betätigen der Eingabemittel entsprechende Bewegung durchführt. Die Eingabemittel umfassen z.B. Schaltwippen und/oder einen Joystick. Dabei kann ein gleichzeitiges Verfahren des Roboterarms bzw. dessen Tool Center Points in bis zu drei oder sechs Richtungen bzw. Freiheitsgraden möglich sein.

Befindet sich der Industrieroboter z.B. innerhalb einer räumlich relativ beengten Anwendung, beispielsweise aufgrund der Abarbeitung eines Anwenderprogramms oder aufgrund von Handverfahren, so kann die Notwendigkeit bestehen, den Roboterarm bzw. dessen Tool Center Point aus diesem relativ beengten Umfeld sicher, d.h. mit möglichst geringem oder keinem Kollisionsrisiko, herauszubewegen.

Ein solches risikoloses Freifahren aus einer beengten Umgebung ist mit Hilfe des Handverfahrens relativ zeitaufwändig.

Alternativ kann man durch rückwärtsgerichtetes Ausführen des Anwenderprogramms versuchen, den Roboterarm automatisiert aus dem kritischen Bereich zu bewegen. Somit soll die gerade vorwärts gefahrene Bewegungsbahn des Roboterarms, gesteuert durch das auf der Steuervorrichtung laufende Anwenderprogramm, mit umgekehrter Bewegungsrichtung gefahren werden. Dies ist ebenfalls relativ aufwändig.

Die DE 25 26 504 A1 beschreibt ein Gerät zum Erzeugen eines Programms für einen Roboterarm, der durch eine mit einem Speicher ausgestattete Steuereinrichtung betriebsmäßig gesteuert wird, so dass dadurch der Roboterarm in einen physikalischen Prozess durch automatisches Wiederholen des Programms während eines automatischen Betriebes und der Durchführung des Prozesses integriert wird, wobei das Programm aus einer Anzahl von vorbestimmten Punkten im Raum besteht, die eine Bewegungsbahn definieren, wobei der Roboterarm eine geometrische Gestalt aufweist, die durch ein verallgemeinertes Koordinatensystem definiert ist.

Die DE 696 03 009 T2 beschreibt ein Robotereinlern-Pendant zum Einlernen oder Betreiben eines Roboters, das ein Bedienungsschaltfeld zum Betreiben des Roboters und eine Anzeigeeinrichtung zum Anzeigen von Anzeigedaten, die sich auf die Bewegung des Roboters beziehen, umfasst, wobei das Pendant ferner zumindest eines von Datenspeichermitteln zum vorübergehenden Speichern von Roboterprogrammen aus einer Roboter-Steuereinrichtung und Mittel zum Lesen von Roboterprogrammen innerhalb der Roboter-Steuereinrichtung eines nach dem anderen umfasst.

Die EP 1 435 280 A2 beschreibt ein Verfahren in Verbindung mit der Programmierung eines Industrieroboters, umfassend das Unterrichten des Roboters in einem Pfad mit einer Anzahl von Wegpunkten, die sich auf oder in der Nähe eines vom Roboter zu verarbeitenden Objekts befinden.

Die US 2004/0193321 A1 beschreibt ein Verfahren zum Programmieren eines Industrieroboters mit einem Werkzeug, um einen Prozess an einem Objekt auszuführen, während einem durch eine Anzahl von Wegpunkten definierten Roboterpfad gefolgt wird.

Die Aufgabe der vorliegenden Erfindung ist es, eine verbesserte Maschine, die eine Steuervorrichtung und eine Mechanik mit wenigstens zwei relativ zueinander angeordneten Bauteilen aufweist, die mittels eines Antriebs der Maschine und gesteuert durch die Steuervorrichtung bezüglich einer Achse relativ zueinander beweglich sind und ein verbessertes Verfahren zum Betreiben einer solchen Maschine anzugeben.

Die Aufgabe der Erfindung wird gelöst durch eine Maschine, aufweisend eine Mechanik, die wenigstens zwei relativ zueinander angeordnete Bauteile aufweist, die mittels wenigstens eines Antriebs der Maschine bezüglich einer Achse relativ zueinander beweglich sind, einen Speicher, und eine mit dem Antrieb gekoppelte Steuervorrichtung, die eingerichtet ist, in einem ersten Betriebsmodus den wenigstens einen Antrieb zum Bewegen der Mechanik derart anzusteuern, dass sich die Mechanik, insbesondere ein der Mechanik zugeordneter ausgezeichneter Punkt entlang einer Bewegungsbahn bewegt, im ersten Betriebsmodus die Bewegungsbahn im Speicher aufzuzeichnen, und in einem zweiten Betriebsmodus den wenigstens einen Antrieb aufgrund der im Speicher aufgezeichneten Bewegungsbahn derart anzusteuern, dass sich die Mechanik, insbesondere der ausgezeichnete Punkt entlang der im Speicher aufgezeichneten Bewegungsbahn entgegen der Bewegungsrichtung bewegt, mit der die Mechanik während des ersten Betriebsmodus bewegt wurde, wobei sich die Geschwindigkeit der Bewegung der Mechanik im zweiten Betriebsmodus von der Geschwindigkeit der Bewegung der Mechanik im ersten Betriebsmodus unterscheidet, und wobei die Steuervorrichtung eingerichtet ist, den Geschwindigkeitsverlauf für die Bewegung der Mechanik während des zweiten Betriebsmodus aufgrund der im Speicher gespeicherten Bewegungsbahn neu zu planen und den wenigstens einen Antrieb entsprechend anzusteuern, ohne den Speicher einfach rückwärts abzuspielen. Die Aufgabe der Erfindung wird auch gelöst durch ein Verfahren zum Betreiben einer Maschine, die eine Steuervorrichtung und eine Mechanik umfasst, die wenigstens zwei relativ zueinander angeordnete Bauteile aufweist, die mittels wenigstens eines Antriebs der Maschine bezüglich einer Achse relativ zueinander beweglich sind, aufweisend folgende Verfahrensschritte:
- in einem ersten Betriebsmodus der Maschine, Ansteuern des wenigstens einen Antriebs mittels der Steuervorrichtung derart, dass sich die Mechanik, insbesondere ein der Mechanik zugeordneter ausgezeichneter Punkt entlang einer Bewegungsbahn bewegt, und gleichzeitig Aufzeichnen der Bewegungsbahn in einem Speicher, und
- in einem zweiten Betriebsmodus der Maschine, Ansteuern des wenigstens einen Antriebs mittels der Steuervorrichtung aufgrund der im Speicher aufgezeichneten Bewegungsbahn derart, dass sich die Mechanik entlang der im Speicher aufgezeichneten Bewegungsbahn entgegen der Bewegungsrichtung bewegt, mit der die Mechanik während des ersten Betriebsmodus bewegt wurde, und
- Bewegen der Mechanik im zweiten Betriebsmodus mit einer Geschwindigkeit entlang der im Speicher aufgezeichneten Bewegungsbahn, die sich von der Geschwindigkeit unterscheidet, mit der die Mechanik im ersten Betriebsmodus bewegt wurde, aufweisend den weiteren Schritt, dass der Geschwindigkeitsverlauf für die Bewegung der Mechanik während des zweiten Betriebsmodus aufgrund der im Speicher gespeicherten Bewegungsbahn durch die Steuereinrichtung neu geplant wird und den wenigstens einen Antrieb entsprechend ansteuert, ohne den Speicher einfach rückwärts abzuspielen.

Die erfindungsgemäße Maschine ist insbesondere eine elektrische Maschine, d.h. ihr wenigstens ein Antrieb ist insbesondere ein elektrischer Antrieb. Die Mechanik umfasst insbesondere mehr als zwei Bauteile, die bezüglich Achsen relativ zueinander mittels eines zugeordneten Antriebs, insbesondere mittels eines elektrischen Antriebs, bewegbar sind. Die Mechanik kann beispielsweise als eine geschlossene Kinematik ausgebildet sein, z.B. als eine Delta-Kinematik oder ein Hexapod.

Die Maschine ist vorzugsweise als ein Industrieroboter ausgebildet, der als Mechanik einen Roboterarm aufweist, der mehrere, hintereinander angeordnete, über Gelenke verbundene Glieder als die wenigstens zwei Bauteile umfasst. In diesem Fall ist der ausgezeichnete Punkt ein dem Roboterarm zugeordneter Tool Center Point.

Die erfindungsgemäße Maschine umfasst die wenigstens beiden Bauteile, welche bezüglich der Achse relativ zueinander beweglich sind. Die Achse ist z.B. eine Drehachse oder eine Linearachse. Im Falle des Industrieroboters umfasst dieser den Roboterarm, dessen Glieder mittels der Antriebe bewegt werden können. Die Antriebe sind insbesondere elektrische Antriebe und vorzugsweise geregelte elektrische Antriebe. Zumindest die elektrischen Motoren dieser elektrischen Antriebe sind vorzugsweise in oder am Roboterarm befestigt.

Die Steuervorrichtung der erfindungsgemäßen Maschine, insbesondere des erfindungsgemäßen Industrieroboters ist eingerichtet, im ersten Betriebsmodus die Mechanik, insbesondere den Roboterarm entlang einer Bewegungsbahn zu bewegen.

Insbesondere steuert die Steuervorrichtung im ersten Betriebsmodus den Roboterarm derart an, dass sich ein dem Roboterarm zugeordneter Tool Center Point entlang der Bewegungsbahn bewegt. Im zweiten Betriebsmodus steuert dann die Steuervorrichtung die Antriebe aufgrund der im Speicher aufgezeichneten Bewegungsbahn derart an, dass sich der Tool Center Point entlang der im Speicher aufgezeichneten Bewegungsbahn bewegt.

Bei dem ersten Betriebsmodus kann es sich z.B. um einen Automatikbetrieb der Maschine, insbesondere des Industrieroboters handeln, in dem die Steuervorrichtung aufgrund eines auf der Steuervorrichtung laufenden Rechnerprogramms, eines sogenannten Anwenderprogramms, den wenigstens einen Antrieb automatisch ansteuert, damit sich die Mechanik bzw. der ausgezeichnete Punkt, insbesondere der Roboterarm bzw. dessen Tool Center Point entlang der Bewegungsbahn bewegt.

Der erste Betriebsmodus kann aber auch einen Handverfahrbetrieb der Maschine bzw. des Industrieroboters darstellen. In diesem Fall weist die erfindungsgemäße Maschine eine mit der Steuervorrichtung gekoppelte oder koppelbare Eingabevorrichtung auf, die Eingabemittel aufweist. Eine solche Eingabevorrichtung ist z.B. ein Programmierhandgerät. Geeignete Eingabemittel sind z.B. Schaltwippen und/oder ein Joystick. Im Handverfahrbetrieb steuert die Steuervorrichtung den wenigstens einen Antrieb für das Bewegen der Mechanik entlang der Bewegungsbahn entsprechend eines manuellen Betätigens der Eingabemittel an. Somit ist es möglich, die Mechanik, insbesondere den Roboterarm mittels der Eingabevorrichtung manuell zu verfahren.

Bevorzugt ist als Speicher ein dynamischer Speicher vorgesehen. Der Speicher kann als LIFO-Speicher (last in - first out) ausgebildet sein. Besonders bevorzugt ist ein als Ringpuffer ausgebildete Speicher vorgesehen. Ein Ringpuffer wird auch als Ringspeicher bezeichnet. Der als Ringpuffer ausgebildete Speicher ist vorzugsweise konfigurierbar, um z.B. dessen Länge zu konfigurieren bzw. vorzubestimmen.

Erfindungsgemäß ist es vorgesehen, dass die erfindungsgemäße Maschine, insbesondere der erfindungsgemäße Industrieroboter, vorzugsweise deren bzw. dessen Steuervorrichtung, während des ersten Betriebsmodus insbesondere quasi kontinuierlich bzw. in diskreten Schritten die von der Mechanik bzw. deren ausgezeichneten Punkt, insbesondere vom Roboterarm bzw. die von dessen Tool Center Point zurückgelegte Bewegungsbahn in dem Speicher aufgezeichnet. Dabei wird beispielsweise die von der Mechanik bzw. vom Roboterarm tatsächlich gefahrene Ist-Bahn inklusive eventuell vorhandener Zusatzachsen vorzugsweise in einem relativ feinen Raster quasi kontinuierlich in den Speicher geschrieben. Insbesondere umfasst die aufgezeichnete Bewegungsbahn eine Information über den mittels der Mechanik bewegten ausgezeichneten Punktes bzw. mittels des Roboterarms bewegten Tool Center Points insbesondere inklusive einer Information über die Lagen, d.h. Positionen und Orientierungen des ausgezeichneten Punktes bzw. des Tool Center Points während seiner Bewegung. Die aufgezeichnete Bewegungsbahn kann auch eine Information über die Achsenstellungen der Achsen des Roboterarms, d.h. eine Information über die relativen Stellungen der einzelnen Glieder des Roboterarms relativ zueinander während der Bewegung, aufweisen.

Somit ist in dem Speicher während des ersten Betriebsmodus die aktuell zurück gelegte Bewegungsbahn der Mechanik, insbesondere des Roboterarms bis zu einer Länge gespeichert, welche durch die Größe des Speichers, beispielsweise die Länge des Ringpuffers, vorgegeben bzw. vorbestimmt ist.

Wird die erfindungsgemäße Maschine im zweiten Betriebsmodus betrieben, dann steuert die Steuervorrichtung den wenigstens einen Antrieb aufgrund der im Speicher gespeicherten Bewegungsbahn an. Dadurch ist es vorzugsweise möglich, dass die Steuervorrichtung im zweiten Betriebsmodus den wenigstens einen Antrieb aufgrund der im Speicher aufgezeichneten Bewegungsbahn derart anzusteuern vermag, dass sich die Mechanik bzw. dessen ausgezeichneter Punkt, insbesondere der Roboterarm bzw. dessen Tool Center Point, entlang der aufgezeichneten Bewegungsbahn entgegen der Bewegungsrichtung bewegt, mit der der die Mechanik, insbesondere der Roboterarm während des ersten Betriebsmodus bewegt wurde.

Befindet sich beispielsweise der erfindungsgemäße Industrieroboter z.B. innerhalb einer räumlich relativ beengten Anwendung beispielsweise aufgrund der Abarbeitung eines Anwenderprogramms oder aufgrund von Handverfahren, so ist es dem Industrieroboter im zweiten Betriebsmodus ermöglicht, möglichst ohne Kollisionsrisiko sich quasi rückwärts wieder aus der beengten Anwendung heraus zu bewegen.

Vorzugsweise werden nur so viele der Bewegungsbahn zugeordneten Punkte, d.h. z.B. diskrete Positionen und gegebenenfalls Orientierungen des ausgezeichneten Punktes, während des Bewegens der Mechanik im ersten Betriebsmodus aufgezeichnet, die nötig sind, damit die Steuervorrichtung den Antrieb aufgrund der im Speicher aufgezeichneten Bewegungsbahn derart anzusteuern vermag, dass sich die Mechanik entlang der aufgezeichneten Bewegungsbahn entgegen der Bewegungsrichtung bewegt, mit der die Mechanik während des ersten Betriebsmodus bewegt wurde. Im Falle des Roboterarms als Mechanik kann die aufgezeichnete Bewegungsbahn eine Information über die Achsenstellungen der Achsen, d.h. eine Information über die relativen Stellungen der einzelnen Glieder des Roboterarms relativ zueinander während der Bewegung aufweisen. Somit ergibt sich insbesondere ein "Rückwärtsfahren" im zweiten Betriebsmodus. Es können also bei der Aufzeichnung zwischen je zwei Punkten im Speicher unterschiedlichste Zeitdifferenzen liegen. Bevorzugt wird eine hinreichende Aufzeichnung der Punkte bzw. Achsenstellungen dadurch erhalten, dass die Aufzeichnung in äquidistanten räumlichen Abständen entlang der im ersten Betriebsmodus abgefahrenen Bahn erfolgt. Weiter bevorzugt kann der räumliche Abstand zwischen zwei aufzuzeichnenden Punkten bzw. Achsenstellungen eine abhängig vom aktuellen Krümmungsradius der abgefahrenen Bahn sein. Zweckmäßigerweise wird die Bahn bei kleinen Krümmungsradien in geringeren räumlichen Abständen abgetastet als bei große Krümmungsradien bzw. auf geraden Bahnabschnitten.

Erfindungsgemäß wird der Speicher während des zweiten Betriebsmodus nicht einfach rückwärts abgespielt, sondern es findet wieder eine neue Planung des Geschwindigkeitsverlaufs für die Bewegung der Mechanik während des zweiten Betriebsmodus aufgrund der im Speicher gespeicherten Bewegungsbahn statt. Dies kann gegebenenfalls aufgrund der unterschiedlichen Zeitintervalle im Speicher oder auch deshalb nötig sein, da Bremsen und Beschleunigen z.B. aufgrund einer Reibung nicht invers zueinander sind. D.h. eine "vorwärts" abfahrbare Bewegungsbahn, d.h. eine Bewegung der Mechanik im ersten Betriebsmodus muss noch lange nicht auch rückwärts, also im zweiten Betriebsmodus, abfahrbar sein, beispielsweise da die zulässigen maximalen Beschleunigungen oder Verzögerungen überschritten werden.

Gemäß einer Variante des erfindungsgemäßen Verfahrens wird für den zweiten Betriebsmodus eine Bahnplanung aufgrund der im Speicher aufgezeichneten Bewegungsbahn durchgeführt, um im zweiten Betriebsmodus der Maschine aufgrund der Bahnplanung den wenigstens einen Antrieb mittels der Steuervorrichtung derart anzusteuern, dass sich die Mechanik, insbesondere der ausgezeichnete Punkt entlang der im Speicher aufgezeichneten Bewegungsbahn entgegen der Bewegungsrichtung bewegt, mit der die Mechanik während des ersten Betriebsmodus bewegt wurde.

Somit ist vorzugsweise die Steuervorrichtung eingerichtet, für den zweiten Betriebsmodus eine Bahnplanung aufgrund der im Speicher aufgezeichneten Bewegungsbahn durchzuführen, um im zweiten Betriebsmodus der Maschine aufgrund der Bahnplanung den wenigstens einen Antrieb derart anzusteuern, dass sich die Mechanik, insbesondere der ausgezeichnet Punkt entlang der im Speicher aufgezeichneten Bewegungsbahn entgegen der Bewegungsrichtung bewegt, mit der die Mechanik während des ersten Betriebsmodus bewegt wurde.

Es kann auch vorgesehen sein, dass im zweiten Betriebsmodus die Steuervorrichtung die Antriebe aufgrund der im Speicher aufgezeichneten Bewegungsbahn derart anzusteuern vermag, dass sich die Mechanik bzw. dessen ausgezeichneter Punkt entlang der aufgezeichneten Bewegungsbahn hin und her bewegt.

Gemäß einer bevorzugten Ausführungsform der erfindungsgemäßen Maschine bzw. des erfindungsgemäßen Verfahrens ist es vorgesehen, dass im zweiten Betriebsmodus die Steuervorrichtung den wenigstens einen Antrieb für das Bewegen der Mechanik bzw. des ausgezeichneten Punktes, insbesondere des Roboterarms bzw. dessen Tool Center Points, entlang der im Speicher aufgezeichneten Bewegungsbahn entsprechend eines manuellen Betätigens der Eingabemittel einer insbesondere mit der Steuervorrichtung gekoppelten bzw. koppelbaren Eingabevorrichtung anzusteuern vermag. Die Eingabevorrichtung ist z.B. das obenstehend beschriebene Programmierhandgerät. Als Eingabemittel wird vorzugsweise eine Schaltwippe, zwei Druckknöpfe und/oder zwei auf einem Touchscreen der Eingabevorrichtung dargestellte Felder verwendet. Durch entsprechendes manuelles Betätigen der Eingabemittel kann somit im zweiten Betriebsmodus ein beliebiges Hin- und Herfahren der Mechanik bzw. des ausgezeichneten Punktes entlang der im Ringpuffer aufgezeichneten Bewegungsbahn realisiert werden.

Die Geschwindigkeit der Bewegung der Mechanik im zweiten Betriebsmodus unterscheidet sich vorzugsweise von der Geschwindigkeit der Bewegung Mechanik bzw. deren ausgezeichneten Punkt im ersten Betriebsmodus. Wurde z.B. die Bewegungsbahn während des Automatikbetriebs im Speicher aufgezeichnet, dann ist vorzugsweise die Geschwindigkeit, mit der die Mechanik, insbesondere der Roboterarm bzw. dessen Tool Center Point im zweiten Betriebsmodus bewegt wird, geringer, vorzugsweise deutlich geringer. Die Geschwindigkeit der Bewegung der Mechanik, insbesondere des Roboterarms bzw. dessen Tool Center Points im zweiten Betriebsmodus ist vorzugsweise der Geschwindigkeit zugeordnet, mit der die Mechanik, insbesondere der Roboterarm bzw. dessen Tool Center Point im Handverfahrbetrieb bewegt wird.

Es kann auch vorgesehen sein, das Aufzeichnen der Bewegungsbahn in den Speicher während des ersten Betriebsmodus insbesondere aufgrund eines Betätigens eines Eingabemittels zu stoppen bzw. zu beenden, wobei nach dem Stoppen bzw. Beenden des Aufzeichnens die Mechanik im ersten Betriebsmodus weiter bewegt wird. Im zweiten Betriebsmodus kann es dann vorgesehen sein, die Mechanik bzw. deren ausgezeichneten Punkt automatisch an den Anfang oder an das Ende der im Speicher aufgezeichneten Bewegungsbahn automatisch heran zu bewegen, sodass sich die Mechanik bzw. deren ausgezeichneter Punkt entlang der im Speicher aufgezeichneten Bewegungsbahn zu bewegen vermag.

Ein Ausführungsbeispiel der Erfindung ist exemplarisch in den beigefügten schematischen Zeichnungen dargestellt. Es zeigen:
- Fig. 1: einen Industrieroboter in einer perspektivischen Darstellung, und
- Fig. 2: ein Programmierhandgerät zum Handverfahren des Industrieroboters.

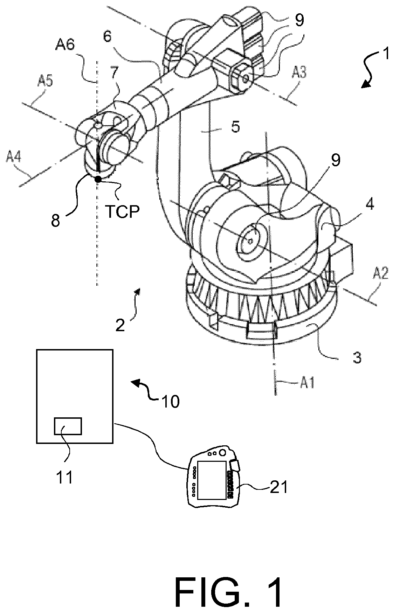

Die Fig. 1 zeigt einen Industrieroboter 1 als bevorzugte Ausführungsform einer Maschine. Der Industrieroboter 1 weist als Mechanik einen Roboterarm 2 auf, der im Falle der vorliegenden Ausführungsform mehrere, nacheinander angeordnete und mittels Gelenke verbundene Glieder als Bauteile umfasst. Bei den Gliedern handelt es sich insbesondere um ein ortsfestes oder bewegliches Gestell 3 und ein relativ zum Gestell 3 um eine vertikal verlaufende Achse A1 drehbar gelagertes Karussell 4. Weitere Glieder des Roboterarms 2 sind im Falle des vorliegenden Ausführungsbeispiels eine Schwinge 5, ein Ausleger 6 und eine vorzugsweise mehrachsige Roboterhand 7 mit einer z.B. als Flansch 8 ausgeführten Befestigungsvorrichtung zum Befestigen eines nicht näher dargestellten Endeffektors. Die Schwinge 5 ist am unteren Ende z.B. an einem nicht näher dargestellten Schwingenlagerkopf auf dem Karussell 4 um eine vorzugsweise horizontale Achse A2 schwenkbar gelagert. Am oberen Ende der Schwinge 5 ist wiederum um eine ebenfalls vorzugsweise horizontale Achse A3 der Ausleger 6 schwenkbar gelagert. Dieser trägt endseitig die Roboterhand 7 mit ihren vorzugsweise drei Achsen A4, A5, A6.

Um den Industrieroboter 1 bzw. dessen Roboterarm 2 zu bewegen, umfasst dieser in allgemein bekannter Weise mit einer Steuervorrichtung 10 (Robotersteuerung) verbundene elektrische Antriebe. In der Fig. 1 sind nur einige der elektrischen Motoren 9 dieser elektrischen Antriebe gezeigt, welche im oder am Roboterarm 2 befestigt sind. Leistungselektroniken der elektrischen Antriebe sind z.B. innerhalb eines Gehäuses eines nicht näher dargestellten Steuer-schranks angeordnet, innerhalb dessen z.B. auch die Steuervorrichtung 10 angeordnet ist. Die elektrischen Motoren 9 sind im Falle des vorliegenden Ausführungsbeispiels Drehstrommotoren, beispielsweise Drehstrom-Synchronmotoren. Die Leistungselektroniken können aber auch im und/oder am Roboterarm 2 angeordnet sein.

Auf der Steuervorrichtung 10 läuft ein Rechenprogramm, ein sogenanntes Anwenderprogramm, mittels dem die Steuervorrichtung 10 die Antriebe in einem Automatikbetrieb derart ansteuert, gegebenenfalls regelt, so dass der Flansch 8 des Industrieroboters 1 bzw. ein Tool Center Point TCP eine vorgegebene Bewegung durchführt. Die Antriebe sind gegebenenfalls geregelte elektrische Antriebe.

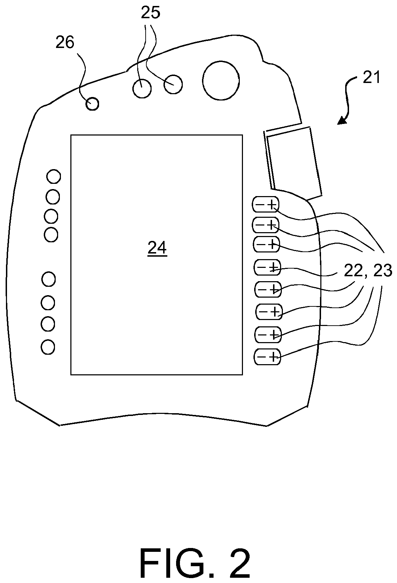

Im Falle des vorliegenden Ausführungsbeispiels ist es möglich, den Roboterarm 2 in einem Handverfahrbetrieb zu betreiben, d.h. durch Handverfahren manuell mittels eines in der Fig. 2 näher dargestellten Programmierhandgerätes 21 zu bewegen. Das Programmierhandgerät 21 ist mit der Steuervorrichtung 10 verbunden und umfasst Eingabemittel 22. Beim Betätigen der Eingabemittel 22 steuert die Steuervorrichtung 10 die Antriebe des Industrieroboters 1 derart an, dass der Flansch 8 bzw. der Tool Center Point TCP des Roboterarms 2 eine dem Betätigen der Eingabemittel 22 entsprechende Bewegung durchführt. Die Eingabemittel 22 umfassen z.B. Schaltwippen 23 und/oder einen nicht näher dargestellten Joystick.

Das Programmierhandgerät 21 kann auch eine Anzeigevorrichtung 24 aufweisen. Ist die Anzeigevorrichtung 24 als ein Touchscreen ausgebildet, dann kann der Touchscreen auch als Eingabemittel des Programmierhandgerätes 21 ausgeführt sein, indem diese z.B. die Schaltwippen 23 anzeigt.

Das Programmierhandgerät 21 kann im Falle des vorliegenden Ausführungsbeispiels auch zum Programmieren des Industrieroboters 1, also zum Erstellen des Anwenderprogramms, verwendet werden.

Im Falle des vorliegenden Ausführungsbeispiels umfasst der Industrieroboter 1 einen als Ringspeicher bzw. Ringpuffer 11 ausgebildeten Speicher, welcher insbesondere mit der Steuervorrichtung 10 verbunden ist oder Bestandteil der Steuervorrichtung 10 ist. Es versteht sich, dass statt des Ring-puffers 11 auch ein anders ausgebildeter Speicher vorgesehen sein kann, beispielsweise ein LIFO Stack bzw. last in - first out Speicher oder ein anderer dynamischer Speicher. Der Ringpuffer 11 ist insbesondere derart ausgelegt, dass er bei Überlauf die ältesten gespeicherten Elemente überschreibt.

Im Falle des vorliegenden Ausführungsbeispiels ist der Industrieroboter 1 eingerichtet, in einem ersten Betriebsmodus und in einem zweiten Betriebsmodus betrieben zu werden. Im ersten Betriebsmodus läuft der Industrieroboter 1 im Automatikbetrieb oder im Handverfahrbetrieb, d.h. der Roboterarm 1 wird entweder aufgrund des auf der Steuervorrichtung 1 laufenden Anwenderprogramms automatisch bewegt oder mittels des Programmierhandgerätes 21 handverfahren. Der gewünschte Betriebsmodus kann z.B. durch Betätigen weiterer Eingabemittel 25 des Programmierhandgerätes 21 aktiviert werden.

Im Falle des vorliegenden Ausführungsbeispiels ist der Industrieroboter 1 bzw. dessen Steuervorrichtung 10 derart eingerichtet, dass während des ersten Betriebsmodus kontinuierlich bzw. in diskreten Schritten die vom Roboterarm 2 bzw. von dessen Tool Center Point TCP zurückgelegte Bewegungsbahn in dem als Ringpuffer 11 ausgeführten Speicher aufgezeichnet wird. Die Abtastrate bzw. Erfassungsrate der Ist-Bahn kann dabei bevorzugt zwischen 1 Hz und 10 kHz, insbesondere zwischen 10 Hz und 100 Hz liegen. Dabei wird die vom Roboterarm 2 tatsächlich gefahrene bzw. erfasste bzw. abgetastete Ist-Bahn inklusive eventuell vorhandener Zusatzachsen vorzugsweise quasi kontinuierlich in den Ringpuffer 11 geschrieben. Insbesondere umfasst die aufgezeichnete Bewegungsbahn eine Information über den mittels des Roboterarms 2 bewegten Tool Center Points TCP, insbesondere inklusive einer Information über die Lagen, d.h. Positionen und Orientierungen des Tool Center Points TCP während seiner Bewegung. Die aufgezeichnete Bewegungsbahn kann auch eine Information über die Achsenstellungen der Achsen A1-A6, d.h. eine Information über die relativen Stellungen der einzelnen Glieder des Roboterarms 2 relativ zueinander während der Bewegung aufweisen.

Somit ist in dem Ringpuffer 11 während des ersten Betriebsmodus die aktuell zurück gelegte Bewegungsbahn des Roboterarms 2 bis zu eine Länge gespeichert, welche durch die Länge des Ringpuffers 11 vorgegeben bzw. vorbestimmt ist.

Abhängig von der Größe des als Ringpuffer 11 ausgeführten, vorzugsweise konfigurierbaren Speichers ergibt sich damit eine gespeicherte maximale Bahnlänge, um welche der Roboterarm 2 aktuell im ersten Betriebsmodus bewegt wurde.

Befindet sich der Industrieroboter in seinem zweiten Betriebsmodus, in den der Industrieroboter 2 z.B. dann geschaltet werden kann, wenn der Roboterarm 2 still steht, dann ist es vorgesehen, dass unter Zuhilfenahme der im Ringpuffer 21 gespeicherten Bewegungsbahn des Roboterarms 2 die Steuervorrichtung 10 den Roboterarm 2 derart ansteuert, dass dieser entlang der gespeicherten Bewegungsbahn insbesondere mittels des Programmierhandgeräts 21 hin und her bewegt werden kann. Dies geschieht vorzugsweise durch Betätigen der Eingabemittel 22 des Programmierhandgerätes 21, vorzugsweise durch Betätigen einer der Schaltwippen 23. Insbesondere ist es dann vorgesehen, dass im Rahmen der im Ringpuffer 1 gespeicherten Bewegungsbahn des Roboterarms 2 der Roboterarm 2 durch entsprechendes Betätigen der entsprechenden Schaltwippe 23 entlang der gespeicherten Bewegungsbahn hin und her bewegt werden kann. Eine Bewegung rückwärts zu der im ersten Betriebsmodus durchgeführten Bewegung kann z.B. durch Drücken des mit einem "-" Zeichen versehenen Teils der Schaltwippe 23 und ein Bewegen des Roboterarms 2 in Richtung der im ersten Betriebsmodus durchgeführten Bewegung kann z.B. durch Drücken des mit einem "+" Zeichen versehenen Teils der Schaltwippe 23 gewählt werden.

Während des zweiten Betriebsmodus wird die zurückgelegte Bewegung des Roboterarms 2 nicht im Ringpuffer 21 aufgezeichnet. Mit anderen Worte findet eine Aufzeichnung der Ist-Bahn im Ringpuffer 21 lediglich im ersten Betriebsmodus statt.

Befindet sich der Industrieroboter 1 in seinem zweiten Betriebsmodus, dann ist es vorzugsweise vorgesehen, dass die entsprechende Schaltwippe 23 automatisch markiert wird, indem sie z.B. beleuchtet oder anderweitig hervorgehoben wird.

Während des zweiten Betriebsmodus wird insbesondere unter Zuhilfenahme der im Ringpuffer 21 gespeicherten Bewegungsbahn der Positionen bzw. Lagen des Tool Center Points TCP bzw. der Stellungen der Achsen A1-A6 des Roboterarms 2 inklusive eventuell vorhandener Zusatzachsen, nach einem eventuell möglichen Ausdünnen der im Ringpuffer 21 gespeicherten Information, eine Bahn mittels der Steuervorrichtung 10 berechnet, die z.B. der zuletzt im ersten Betriebsmodus gefahrene Vorwärtsbewegung, aber in umgekehrter Richtung, repräsentiert.

Die Geschwindigkeit der Bewegung des Roboterarms 2 während des zweiten Betriebsmodus erfolgt vorzugsweise unabhängig von der Geschwindigkeit des Roboterarms 2 während des ersten Betriebsmodus, insbesondere wenn sich der Industrieroboter 1 während des ersten Betriebsmodus im Automatikbetrieb befand.

Die Geschwindigkeit, mit der der Roboterarm 2 im zweiten Betriebsmodus bewegt wird, ist vorzugsweise an die Geschwindigkeit angelehnt bzw. entspricht der Geschwindigkeit, mit der der Roboterarm 2 während des Handverfahrbetriebs bewegt wird.

Während des zweiten Betriebsmodus wird insbesondere der Roboterarm 2 durch Drücken des mit "-" gekennzeichneten Teils der entsprechenden Schaltwippe 23 solange entgegen der im ersten Betriebsmodus durchgeführten Bewegung bewegt, solange die entsprechende Schaltwippe 23 betätigt wird oder bis der Roboterarm 2 entlang der maximal im Ringpuffer 21 gespeicherten Bahnlänge bewegt wurde. Bei Erreichen dieser Bahnlänge stoppt vorzugsweise die Steuervorrichtung 10 die Bewegung des Roboterarms 2 mit einer entsprechenden Meldung.

Insbesondere ist es vorgesehen, dass wenn die Schaltwippe 23 vorher losgelassen wird, d.h. wenn vor dem Erreichen des Endes der aufgezeichneten Bewegungsbahn der mit "-" gekennzeichnete Teil der Schaltwippe 23 nicht mehr betätigt wird, die Bewegung des Roboterarms 2 ebenfalls stoppt. Durch ein erneutes Betätigen der Schaltwippe 23 während des zweiten Betriebsmodus steuert die Steuervorrichtung 10 aufgrund der im Ringpuffer 11 gespeicherten Bewegungsbahn den Roboterarm 22 weiter an, so dass sich dieser entlang der gespeicherten Bewegungsbahn bewegt.

Im Falle des vorliegenden Ausführungsbeispiels ist es noch vorgesehen, dass beispielsweise durch Drücken des mit "+" gekennzeichneten Teils der Schaltwippe 23 der Roboterarm 2 aufgrund der im Ringpuffer 11 gespeicherten Bewegungsbahn in Richtung der im ersten Betriebsmodus durchgeführten Bewegung bewegt wird. Dies geschieht solange die Schaltwippe 23 betätigt wird, aber maximal bis zum Erreichen des Punktes auf der aufgezeichneten Bewegungsbahn, bei dem die Bewegung im ersten Betriebsmodus beendet wurde bzw. an dem Punkt, an dem das Aufzeichnen der Bewegungsbahn im Ringpuffer 11 beendet wurde.

Auf diese Weise kann beliebig oft zwischen Vorwärts- und Rückwärtsfahren entlang der aufgezeichneten Bewegungsbahn gewechselt werden.

Um eine Rekursivität in der Bewegungsabarbeitung zu vermeiden, sind insbesondere diese im zweiten Betriebsmodus durchgeführten Bewegungen, die einzigen Bewegungen, die nicht bzw. nicht vollständig im Ringpuffer 11 aufgezeichnet werden.

Im Falle des vorliegenden Ausführungsbeispiels ist es noch vorgesehen, dass wenn der Industrieroboter 1 vom zweiten Betriebsmodus in den ersten Betriebsmodus geschaltet wird, der Teil der im Ringpuffer 11 aufgezeichneten Bewegungsbahn zunächst aufgezeichnet bleibt, welcher aktuell im zweiten Betriebsmodus noch abgefahren werden hätte können. Der Teil im Ringpuffer 11 aufgezeichnete Teil der Bewegungsbahn, der aktuell noch durch Drücken des mit "+" gekennzeichneten Teils der Schaltwippe 23 noch verfügbar ist, wird dagegen gelöscht.

Es kann auch vorgesehen sein, dass während des ersten Betriebsmodus, insbesondere während des Handverfahrbetriebs, das Aufzeichnen der Bewegungsbahn im Ringpuffer 11 deaktiviert bzw. gestoppt werden kann, indem z.B. ein Eingabemittel 26 des Programmierhandgerätes 21 betätigt wird, und der Roboterarm 2 im ersten Betriebsmodus weiter bewegt wird. Im zweiten Betriebsmodus kann es dann vorgesehen sein, dass der Roboterarm 2 bzw. dessen Tool Center Point TCP automatisch, gesteuert durch die Steuervorrichtung 10, an den Anfang oder an das Ende der im Ringpuffer 11 aufgezeichneten Bewegungsbahn heranbewegt wird, sodass sich der Roboterarm 2 entlang der im Ringpuffer 11 aufgezeichneten Bewegungsbahn zu bewegen vermag.

Dadurch ergibt sich die Möglichkeit, einen wählbaren Punkt einer solchen Trajektorie anzufahren. Man hat damit eine Möglichkeit, auf relativ einfache Weise ein Handverfahren in einer frei definierbaren, aber ab einem gewissen Zeitpunkt fixen Trajektorie anzubieten.

## Patentansprüche

1. Maschine, aufweisend eine Mechanik (2), die wenigstens zwei relativ zueinander angeordnete Bauteile (3-7) aufweist, die mittels wenigstens eines Antriebs der Maschine (1) bezüglich einer Achse (A1-A6) relativ zueinander beweglich sind, einen Speicher (11), und eine mit dem Antrieb gekoppelte Steuervorrichtung (10), die eingerichtet ist,
in einem ersten Betriebsmodus den wenigstens einen Antrieb zum Bewegen der Mechanik (2) derart anzusteuern, dass sich die Mechanik (2), insbesondere ein der Mechanik (2) zugeordneter ausgezeichneter Punkt (TCP) entlang einer Bewegungsbahn bewegt, im ersten Betriebsmodus die Bewegungsbahn im Speicher (11) aufzuzeichnen, und
in einem zweiten Betriebsmodus den wenigstens einen Antrieb aufgrund der im Speicher (11) aufgezeichneten Bewegungsbahn derart anzusteuern, dass sich die Mechanik (2), insbesondere der ausgezeichnete Punkt (TCP) entlang der im Speicher (11) aufgezeichneten Bewegungsbahn entgegen der Bewegungsrichtung bewegt, mit der die Mechanik (2) während des ersten Betriebsmodus bewegt wurde, wobei sich die Geschwindigkeit der Bewegung der Mechanik (2) im zweiten Betriebsmodus von der Geschwindigkeit der Bewegung der Mechanik (2) im ersten Betriebsmodus unterscheidet, **dadurch gekennzeichnet, dass** die Steuervorrichtung (10) eingerichtet ist, den Geschwindigkeitsverlauf für die Bewegung der Mechanik (2) während des zweiten Betriebsmodus aufgrund der im Speicher (11) gespeicherten Bewegungsbahn neu zu planen und den wenigstens einen Antrieb entsprechend anzusteuern, ohne den Speicher einfach rückwärts abzuspielen.

2. Maschine nach Anspruch 1, welche als Industrieroboter (1) ausgebildet ist, der einen als Mechanik ausgebildeten Roboterarm (2) umfasst, der mehrere, hintereinander angeordnete, über Gelenke verbundene Glieder (3-7) als die wenigstens zwei Bauteile aufweist, welche mittels zugeordneter Antriebe bezüglich Achsen (A1-A6) relativ zueinander bewegbar sind, wobei die Steuervorrichtung (10) eingerichtet ist, im ersten Betriebsmodus die Antriebe zum Bewegen des Roboterarms (2) derart anzusteuern, dass sich der Roboterarm (2), insbesondere ein der Roboterarm (2) zugeordneter Tool Center Point (TCP) als ausgezeichneter Punkt, entlang der Bewegungsbahn bewegt,
wobei die Steuervorrichtung (10) eingerichtet ist, im ersten Betriebsmodus die Bewegungsbahn im Speicher (11) aufzuzeichnen, und
wobei die Steuervorrichtung (10) eingerichtet ist, im zweiten Betriebsmodus die Antriebe aufgrund der im Speicher (11) aufgezeichneten Bewegungsbahn derart anzusteuern, dass sich der Roboterarm (2), insbesondere der Tool Center Point (TCP) entlang der im Speicher (11) aufgezeichneten Bewegungsbahn bewegt.

3. Maschine nach Anspruch 1 oder 2, bei welcher der erste Betriebsmodus ein Automatikbetrieb der Maschine (1) ist, in dem die Steuervorrichtung (10) aufgrund eines auf der Steuervorrichtung (10) laufenden Anwenderprogramms den zumindest einen Antrieb automatisch ansteuert, damit sich die Mechanik (2) entlang der Bewegungsbahn bewegt.

4. Maschine nach einem der Ansprüche 1 bis 3, deren Steuervorrichtung (10) eingerichtet ist, im zweiten Betriebsmodus den Antrieb aufgrund der im Speicher (11) aufgezeichneten Bewegungsbahn derart anzusteuern, dass sich die Mechanik (2) entlang der aufgezeichneten Bewegungsbahn hin und her bewegt.

5. Maschine nach einem der Ansprüche 1 bis 4, aufweisend eine mit der Steuervorrichtung (10) gekoppelte oder koppelbare Eingabevorrichtung (21), die Eingabemittel (22) aufweist, und im zweiten Betriebsmodus die Steuervorrichtung (10) den Antrieb für das Bewegen der Mechanik (2) entlang der im Speicher (11) aufgezeichneten Bewegungsbahn entsprechend eines manuellen Betätigens der Eingabemittel (22) ansteuert.

6. Maschine nach einem der Ansprüche 1 bis 5, deren Steuervorrichtung (10) eingerichtet ist, während des ersten Betriebsmodus aufgrund eines Betätigens eines Eingabemittels (26) das Aufzeichnen der aktuellen Bewegungsbahn im Speicher (11) zu beenden und nach dem Beenden des Aufzeichnens der Bewegungsbahn im ersten Betriebsmodus die Mechanik (2) weiter zu bewegen, und deren Steuervorrichtung (10) eingerichtet ist, im zweiten Betriebsmodus die Mechanik (2) automatisch an den Anfang oder an das Ende der im Speicher (11) aufgezeichneten Bewegungsbahn zu bewegen, sodass sich die Mechanik (2) entlang der im Speicher (11) aufgezeichneten Bewegungsbahn zu bewegen vermag.

7. Maschine nach einem der vorigen Ansprüche, wobei der Speicher (11) als Ringpuffer oder als LIFO-Speicher ausgebildet ist.

8. Verfahren zum Betreiben einer Maschine (1), die eine Steuervorrichtung (10), und eine Mechanik (2) aufweist, die wenigstens zwei relativ zueinander angeordnete Bauteile (3-7) aufweist, die mittels wenigstens eines Antriebs der Maschine (1) bezüglich einer Achse (A1-A6) relativ zueinander beweglich sind, aufweisend folgende Verfahrensschritte:
- in einem ersten Betriebsmodus der Maschine (1), Ansteuern des wenigstens einen Antriebs mittels der Steuervorrichtung (10) derart, dass sich die Mechanik (2), insbesondere ein der Mechanik (2) zugeordneter ausgezeichneter Punkt (TCP) entlang einer Bewegungsbahn bewegt, und gleichzeitig Aufzeichnen der Bewegungsbahn in einem Speicher (11), und
- in einem zweiten Betriebsmodus der Maschine (1), Ansteuern des wenigstens einen Antriebs mittels der Steuervorrichtung (10) aufgrund der im Speicher (11) aufgezeichneten Bewegungsbahn derart, dass sich die Mechanik (2) entlang der im Speicher (11) aufgezeichneten Bewegungsbahn entgegen der Bewegungsrichtung bewegt, mit der die Mechanik (2) während des ersten Betriebsmodus bewegt wurde, und
- Bewegen der Mechanik (2) im zweiten Betriebsmodus mit einer Geschwindigkeit entlang der im Speicher (11) aufgezeichneten Bewegungsbahn, die sich von der Geschwindigkeit unterscheidet, mit der die Mechanik (2) im ersten Betriebsmodus bewegt wurde, **gekennzeichnet durch** den weiteren Schritt, dass der Geschwindigkeitsverlauf für die Bewegung der Mechanik (2) während des zweiten Betriebsmodus aufgrund der im Speicher (11) gespeicherten Bewegungsbahn durch die Steuervorrichtung (10) neu geplant und der wenigstens eine Antrieb entsprechend angesteuert wird, ohne den Speicher einfach rückwärts abzuspielen.

9. Verfahren nach Anspruch 8, bei dem die Maschine als ein Industrieroboter (1) ausgebildet ist, der als Mechanik einen Roboterarm (2) aufweist, der mehrere, hintereinander angeordnete, über Gelenke verbundene Glieder (3-7) als die wenigstens zwei Bauteile umfasst und insbesondere der ausgezeichnete Punkt ein dem Roboterarm (2) zugeordneten Tool Center Point (TCP) ist.

10. Verfahren nach Anspruch 9 oder 8, bei dem der erste Betriebsmodus ein Automatikbetrieb der Maschine (1) ist, in dem die Steuervorrichtung (10) aufgrund eines auf der Steuervorrichtung (10) laufenden Anwenderprogramms den zumindest einen Antrieb automatisch ansteuert, damit sich die Mechanik (2) entlang der Bewegungsbahn bewegt, und/oder bei dem der erste Betriebsmodus ein Handverfahrbetrieb der Maschine (1) darstellt und die Maschine (1) eine mit der Steuervorrichtung (10) gekoppelte oder koppelbare Eingabevorrichtung (21) umfasst, die Eingabemittel (22) aufweist, und im Handverfahrbetrieb die Steuervorrichtung (10) den Antrieb für das Bewegen der Mechanik (2) entlang der Bewegungsbahn entsprechend eines manuellen Betätigens der Eingabemittel (22) ansteuert.

11. Verfahren nach einem der Ansprüche 8 bis 10, und/oder aufweisend Ansteuern des Antriebs mittels der Steuervorrichtung (10) im zweiten Betriebsmodus aufgrund der im Speicher (11) aufgezeichneten Bewegungsbahn derart, dass sich die Mechanik (2) entlang der aufgezeichneten Bewegungsbahn hin und her bewegt.

12. Verfahren nach einem der Ansprüche 8 bis 11, aufweisend Ansteuern des Antriebs mittels der Steuervorrichtung (10) aufgrund der im Speicher (11) aufgezeichneten Bewegungsbahn und in Abhängigkeit eines Betätigens von Eingabemitteln (22) einer Eingabevorrichtung (21).

13. Verfahren nach einem der Ansprüche 8 bis 12, aufweisend Beenden des Aufzeichnens der Bewegungsbahn in den Speicher (11) während des ersten Betriebsmodus insbesondere aufgrund eines Betätigens eines Eingabemittels (26) und weiter Bewegen der Mechanik (2) im ersten Betriebsmodus und automatisches Heranbewegen der Mechanik (2) im zweiten Betriebsmodus an den Anfang oder an das Ende der im Speicher (11) aufgezeichneten Bewegungsbahn, sodass sich die Mechanik (2) entlang der im Speicher (11) aufgezeichneten Bewegungsbahn zu bewegen vermag.

## Claims

1. Machine, comprising a mechanism (2) having at least two components (3-7) arranged relative to each other, which are movable relative to each other with respect to an axis (A1-A6) by means of at least one drive of the machine (1), a memory (11), and a control device (10) coupled to the drive, which is configured,
- in a first operating mode, to control the at least one drive for moving the mechanism (2) in such a way that the mechanism (2), in particular a defined point (TCP) associated to the mechanism (2), moves along a movement path,
- in the first operating mode, to record the movement path in the memory (11), and
- in a second operating mode, to control the at least one drive on the basis of the movement path recorded in the memory (11) in such a way that the mechanism (2), in particular the defined point (TCP), moves along the movement path recorded in the memory (11) counter to the direction of movement with which the mechanism (2) has been moved during the first operating mode, whereby the speed of the movement of the mechanism (2) in the second operating mode differs from the speed of the movement of the mechanism (2) in the first operating mode, **characterized in that** the control device (10) is configured to reschedule the speed profile for the movement of the mechanism (2) during the second operating mode on the basis of the movement path stored in the memory (11) and to control the at least one drive accordingly, without simply replaying the memory backwards.

2. Machine according to claim 1, which is designed as an industrial robot (1) comprising a robot arm (2) designed as the mechanism, which has a plurality of links (3-7) arranged one behind the other and connected by joints as the at least two components, which can be moved relative to one another with respect to axes (A1-A6) by means of associated drives, wherein the control device (10) is configured to control the drives for moving the robot arm (2) in the first operating mode in such a way that the robot arm (2), in particular a tool center point (TCP) assigned to the robot arm (2) as the defined point, moves along the movement path,
wherein the control device (10) is configured to record the movement path in the memory (11) in the first operating mode, and
the control device (10) is set up to control the drives in the second operating mode on the basis of the movement path recorded in the memory (11) in such a way that the robot arm (2), in particular the tool center point (TCP), moves along the movement path recorded in the memory (11).

3. Machine according to claim 1 or 2, wherein the first operating mode is an automatic mode of operation of the machine (1) in which the control device (10), based on a user program running on the control device (10), automatically controls the at least one drive to cause the mechanism (2) to move along the movement path.

4. Machine according to one of claims 1 to 3, wherein the control device (10) is configured to control the drive on the basis of the movement path recorded in the memory (11) in the second operating mode in such a way that the mechanism (2) moves back and forth along the recorded movement path.

5. Machine according to one of claims 1 to 4, comprising an input device (21) coupled or couplable to the control device (10) and comprising input means (22), and in the second operating mode the control device (10) controls the drive for moving the mechanism (2) along the path of movement recorded in the memory (11) according to a manual actuation of the input means (22).

6. Machine according to one of claims 1 to 5, wherein the control device (10) is configured to stop recording the current movement path in the memory (11) during the first operating mode on the basis of an actuation of an input means (26) and to continue moving the mechanism (2) after stopping the recording of the movement path in the first operating mode, and wherein the control device (10) is configured to automatically move the mechanism (2) to the beginning or to the end of the movement path recorded in the memory (11), in the second operating mode, so that the mechanism (2) is able to move along the movement path recorded in the memory (11).

7. Machine according to one of the preceding claims, wherein the memory (11) is designed as a ring buffer or as a LIFO-memory.

8. Method for operating a machine (1) which comprises a control device (10) and a mechanism (2) which has at least two components (3-7) which are arranged relative to one another and can be moved relative to one another with respect to an axis (A1-A6) by means of at least one drive of the machine (1), comprising the following method steps:
- in a first operating mode of the machine (1), controlling the at least one drive by means of the control device (10) in such a way that the mechanism (2), in particular a defined point (TCP) associated with the mechanism (2), moves along a movement path, and at the same time recording the movement path in a memory (11), and
- in a second operating mode of the machine (1), controlling the at least one drive by means of the control device (10) on the basis of the movement path recorded in the memory (11) in such a way that the mechanism (2) moves along the movement path recorded in the memory (11) counter to the direction of movement with which the mechanism (2) has been moved during the first operating mode, and
- in the second operating mode moving the mechanism (2) at a speed along the movement path recorded in the memory (11) that is different from the speed at which the mechanism (2) was moved in the first operating mode, **characterized by** the further step that the speed profile for the movement of the mechanism (2) during the second operating mode is rescheduled by the control device (10) on the basis of the movement path stored in the memory (11) and the at least one drive is controlled accordingly, without simply replaying the memory backwards.

9. Method according to claim 8, wherein the machine is designed as an industrial robot (1) having as the mechanism a robot arm (2) comprising a plurality of links (3-7) arranged in series and connected by joints as the at least two components, and in particular the defined point is a tool center point (TCP) associated with the robot arm (2).

10. Method according to claim 9 or 8, in which the first operating mode is an automatic mode of the machine (1), in which the control device (10) automatically controls the at least one drive on the basis of a user program running on the control device (10) so that the mechanism (2) moves along the movement path, and/or in which the first operating mode is a manual travel mode of the machine (1) and the machine (1) comprises an input device (21) coupled or couplable to the control device (10) which comprises input means (22), and in the manual travel mode the control device (10) controls the drive for moving the mechanism (2) along the path of movement in accordance with a manual actuation of the input means (22).

11. Method according to one of claims 8 to 10, and/or comprising controlling the drive by means of the control device (10) in the second operating mode on the basis of the movement path recorded in the memory (11) in such a way that the mechanism (2) moves back and forth along the recorded movement path.

12. Method according to one of claims 8 to 11, comprising controlling the drive by means of the control device (10) on the basis of the movement path recorded in the memory (11) and in dependence on an actuation of input means (22) of an input device (21).

13. Method according to one of claims 8 to 12, comprising terminating the recording of the movement path in the memory (11) during the first operating mode, in particular on the basis of an actuation of an input means (26), and continuing moving the mechanism (2) in the first operating mode and automatically moving the mechanism (2) in the second operating mode to the beginning or to the end of the movement path recorded in the memory (11), so that the mechanism (2) is able to move along the movement path recorded in the memory (11).

## Revendications

1. Machine, présentant un mécanisme (2) qui présente au moins deux composants (3-7) agencés relativement les uns aux autres, qui sont mobiles relativement l'un à l'autre par rapport à des axes (A1-A6) au moyen d'au moins un entraînement de la machine (1), une mémoire (11), et un dispositif de commande (10) couplé à l'entraînement, qui est conçu
pour piloter, dans un premier mode de fonctionnement, ledit au moins un entraînement pour déplacer le mécanisme (2) de telle sorte que le mécanisme (2), en particulier un point (TCP) marqué, associé au mécanisme (2), se déplace le long d'une trajectoire de déplacement pour enregistrer, dans le premier mode de fonctionnement, la trajectoire de mouvement dans la mémoire (11), et
pour piloter, dans un deuxième mode de fonctionnement, ledit au moins un entraînement sur la base de la trajectoire de déplacement enregistrée dans la mémoire (11) de telle sorte que le mécanisme (2), en particulier le point (TCP) marqué, se déplace le long de la trajectoire de déplacement enregistrée dans la mémoire (11) à l'encontre de la direction de déplacement avec laquelle le mécanisme (2) a été déplacé pendant le premier mode de fonctionnement, la vitesse de déplacement du mécanisme (2) dans le deuxième mode de fonctionnement étant différente de la vitesse de déplacement du mécanisme (2) dans le premier mode de fonctionnement, **caractérisée en ce que** le dispositif de commande (10) est conçu pour replanifier la courbe de vitesse pour le mouvement du mécanisme (2) pendant le deuxième mode de fonctionnement sur la base de la trajectoire de mouvement enregistrée dans la mémoire (11) et pour piloter en conséquence ledit au moins un entraînement, sans simplement lire la mémoire à rebours.

2. Machine selon la revendication 1, qui est réalisée sous la forme de robot industriel (1) qui comprend un bras de robot (2) réalisé en tant que mécanisme, qui présente plusieurs composants (3-7) disposés les uns derrière les autres, reliés par des articulations, en tant que lesdits au moins deux composants, qui peuvent être déplacés les uns relativement aux autres par rapport à des axes (A1 -A6) au moyen d'entraînements associés, le dispositif de commande (10) étant conçu pour piloter, dans le premier mode de fonctionnement, les entraînements destinés à déplacer le bras de robot (2) de telle sorte que le bras de robot (2), en particulier un Tool Center Point (TCP) associé au bras de robot (2), se déplace, en tant que point marqué, le long de la trajectoire de déplacement,
le dispositif de commande (10) étant conçu, dans le premier mode de fonctionnement, pour enregistrer la trajectoire de déplacement dans la mémoire (11), et
le dispositif de commande (10) étant conçu, dans le deuxième mode de fonctionnement, pour piloter les entraînements sur la base de la trajectoire de déplacement enregistrée dans la mémoire (11) de telle sorte que le bras de robot (2), en particulier le Tool Center Point (TCP), se déplace le long de la trajectoire de déplacement enregistrée dans la mémoire (11).

3. Machine selon la revendication 1 ou 2, dans laquelle le premier mode de fonctionnement est un fonctionnement automatique de la machine (1), dans lequel le dispositif de commande (10) pilote, sur la base d'un programme d'utilisateur fonctionnant sur le dispositif de commande (10), automatiquement ledit au moins un entraînement afin que le mécanisme (2) se déplace le long de la trajectoire de déplacement.

4. Machine selon l'une des revendications 1 à 3, dont le dispositif de commande (10) est conçu, dans le deuxième mode de fonctionnement, pour piloter l'entraînement sur la base de la trajectoire de déplacement enregistrée dans la mémoire (11) de telle sorte que le mécanisme (2) se déplace en va-et-vient le long de la trajectoire de déplacement enregistrée.

5. Machine selon l'une quelconque des revendications 1 à 4, présentant un dispositif d'entrée (21) couplé ou pouvant être couplé au dispositif de commande (10), qui présente des moyens d'entrée (22) et, dans le deuxième mode de fonctionnement, le dispositif de commande (10) pilote l'entraînement pour déplacer le mécanisme (2) le long de la trajectoire de déplacement enregistrée dans la mémoire (11), en fonction d'un actionnement manuel des moyens d'entrée (22).

6. Machine selon l'une quelconque des revendications 1 à 5, dont le dispositif de commande (10) est conçu, pendant le premier mode de fonctionnement, pour terminer, sur la base d'un actionnement d'un moyen d'entrée (26), l'enregistrement de la trajectoire de déplacement actuel dans la mémoire (11) et, après avoir terminé l'enregistrement de la trajectoire de mouvement dans le premier mode de fonctionnement, pour continuer à déplacer le mécanisme (2), et dont le dispositif de commande (10) est conçu, pendant le deuxième mode de fonctionnement, pour déplacer automatiquement le mécanisme (2), vers le début ou vers la fin de la trajectoire de déplacement enregistrée dans la mémoire (11), de telle sorte que le mécanisme (2) est apte à se déplacer le long de la trajectoire de déplacement enregistrée dans la mémoire (11).

7. Machine selon l'une des revendications précédentes, dans laquelle la mémoire (11) est conçue comme une mémoire tampon circulaire ou comme une mémoire LIFO.

8. Procédé pour faire fonctionner une machine (1) qui présente un dispositif de commande (10) et un mécanisme (2) qui présente au moins deux composants (3-7) disposés les uns par rapport aux autres, qui sont mobiles relativement les uns aux autres par rapport à un axe (A1-A6) au moyen d'au moins un entraînement de la machine (1), présentant les étapes de procédé suivantes :
- dans un premier mode de fonctionnement de la machine (1), pilotage dudit au moins un entraînement au moyen du dispositif de commande (10) de telle sorte que le mécanisme (2), en particulier un point (TCP) marqué, associé au mécanisme (2), se déplace le long d'une trajectoire de déplacement, et simultanément, enregistrement de la trajectoire de déplacement dans une mémoire (11), et
- dans un deuxième mode de fonctionnement de la machine (1), pilotage dudit au moins un entraînement au moyen du dispositif de commande (10), sur la base de la trajectoire de déplacement enregistrée dans la mémoire (11) de telle sorte que le mécanisme (2) se déplace le long de la trajectoire de déplacement enregistrée dans la mémoire (11) à l'encontre de la direction de déplacement avec laquelle le mécanisme (2) a été déplacé pendant le premier mode de fonctionnement, et
- dans le deuxième mode de fonctionnement, déplacement du mécanisme (2) le long de la trajectoire de déplacement enregistrée dans la mémoire (11) à une vitesse qui est différente de la vitesse à laquelle le mécanisme (2) a été déplacé dans le premier mode de fonctionnement,
**caractérisé par** l'étape supplémentaire consistant à replanifier la courbe de vitesse pour le déplacement du mécanisme (2) pendant le deuxième mode de fonctionnement sur la base de la trajectoire de déplacement enregistrée dans la mémoire (11) par le dispositif de commande (10) et à piloter ledit au moins en conséquence un entraînement, sans simplement lire la mémoire à rebours.

9. Procédé selon la revendication 8, dans lequel la machine est réalisée sous la forme d'un robot industriel (1) qui présente comme mécanisme un bras de robot (2) qui comprend plusieurs éléments (3-7) disposés les uns derrière les autres et reliés par des articulations, en tant que lesdits au moins deux composants, et en particulier le point marqué est un Tool Center Point (TCP) associé au bras de robot (2).

10. Procédé selon la revendication 9 ou 8, dans lequel le premier mode de fonctionnement est un fonctionnement automatique de la machine (1), dans lequel le dispositif de commande (10) pilote automatiquement, sur la base d'un programme d'utilisateur fonctionnant sur le dispositif de commande (10), ledit au moins un entraînement afin que le mécanisme (2) se déplace le long de la trajectoire de déplacement, et/ou dans lequel le premier mode de fonctionnement constitue un mode de déplacement manuel de la machine (1), et la machine (1) comprend un dispositif d'entrée (21) couplé ou pouvant être couplé au dispositif de commande (10), qui présente des moyens d'entrée (22), et dans le mode de déplacement manuel, le dispositif de commande (10) pilote l'entraînement pour le déplacement du mécanisme (2) le long de la trajectoire de déplacement conformément à un actionnement manuel des moyens d'entrée (22).

11. Procédé selon l'une des revendications 8 à 10, et/ou présentant le pilotage de l'entraînement au moyen du dispositif de commande (10) dans le deuxième mode de fonctionnement, sur la base de la trajectoire de déplacement enregistrée dans la mémoire (11), de telle sorte que le mécanisme (2) se déplace en va-et-vient le long de la trajectoire de déplacement enregistrée.

12. Procédé selon l'une quelconque des revendications 8 à 11, présentant le pilotage de l'entraînement au moyen du dispositif de commande (10), sur la base de la trajectoire de déplacement enregistrée dans la mémoire (11) et en fonction d'un actionnement de moyens d'entrée (22) d'un dispositif d'entrée (21) .

13. Procédé selon l'une quelconque des revendications 8 à 12, présentant la terminaison de l'enregistrement de la trajectoire dans la mémoire (11) pendant le premier mode de fonctionnement, en particulier sur la base d'un actionnement d'un moyen d'entrée (26), et la poursuite du déplacement du mécanisme (2), dans le premier mode de fonctionnement, et le rapprochement automatique du mécanisme (2) vers le début ou vers la fin de la trajectoire enregistrée dans la mémoire (11), dans le deuxième mode de fonctionnement, de telle sorte que le mécanisme (2) est apte à se déplacer le long de la trajectoire enregistrée dans la mémoire (11).
